## Europäisches Patentamt
## European Patent Office
## Office européen des brevets

(19)

(11) Publication number: **0 124 661**
**B1**

# EUROPEAN PATENT SPECIFICATION

(12)

(45) Date of publication of patent specification: **13.08.86**

(51) Int. Cl.⁴: **E 04 C 5/12,** F 16 G 11/04

(21) Application number: **83302480.5**

(22) Date of filing: **03.05.83**

(54) An anchorage for a wire strand.

<table>
<tr><td>

(43) Date of publication of application:
**14.11.84 Bulletin 84/46**

(45) Publication of the grant of the patent:
**13.08.86 Bulletin 86/33**

(84) Designated Contracting States:
**CH DE FR GB LI**

(56) References cited:
**CH-A- 393 691**
**CH-A- 586 814**
**GB-A-1 344 375**

</td><td>

(73) Proprietor: **SHINKO KOSEN KOGYO KABUSHIKI KAISHA also known as SHINKO WIRE CO. LTD.**
**2 Doi-cho 7 chome**
**Amagasaki 660 (JP)**

(72) Inventor: **Makoto, Kurauchi**
**2-206, 8-ban, Koshienguchi 4-chome**
**Nishinomiya-shi Hyogo-ken (JP)**
Inventor: **Takeshi, Kobayashi**
**3,1-ban, Wakakusacho 2-chome Suma-ku**
**Kobe-shi Hyogo-ken (JP)**
Inventor: **Masakazu, Izumi**
**938-10, Higashinabata 2-chome**
**Ikoma-shi Nara-ken (JP)**
Inventor: **Jiro, Aota**
**1-307, 3-ban, Chaenbacho**
**Akashi-shi Hyogo-ken (JP)**

(74) Representative: **Boon, Graham Anthony et al**
**Elkington and Fife High Holborn House 52/54**
**High Holborn**
**London, WC1V 6SH (GB)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# Description

The present invention relates to an anchorage for a steel wire strand for prestressed concrete (hereinafter referred to as a PC wire strand) suitable for prestressed concrete members or members of a stray cable, wherein an anchoring means is used in an embedded state.

Heretofore, in a prestressed concrete member wherein an anchoring means is used in an embedded state and not used repeatedly, for example, in a post-tensioned concrete member or centrifugally processed pretension prestressed concrete pile (hereinafter referred to as a PC pile) or the like, there has been used a steel wire or bar as a steel material for prestressed concrete (hereinafter referred to as PC steel material), an end portion of which is subjected to heading at a warm region (100—500°C) or cold region to form an enlarged anchor portion permitting an embedded use of the steel wire or bar. However, the recent tendency to an enhancement of strength of the aforementioned pile or the like has given rise to an increasing demand for a PC steel material of larger diameter and of higher strength. In this case, wires for prestressed concrete (hereinafter referred to as PC wires) encounters a limit in the enlargement of their diameter and enhancement of their strength, and PC steel bars also encounter a limit in the enhancement of their strength. On the other hand, PC wire strands can easily be increased in diameter and strengthened and are superior as regards economy, so their application to the foregoing pile or the like is now in demand. However, the fact is that no anchoring means for an end portion of PC wire strands has yet been developed which is inexpensive and compact.

More particularly, a PC wire strand is usually anchored by means of an anchoring member such as a chuck or a compression grip, but these anchor fittings are expensive and large in size. Attempts have also been made to apply the foregoing heading anchor method to a PC wire strand, but this has not been used practically yet because the resultant enlarged head portion is deficient in strength with only 40 to 60% of the breaking strength of the PC wire strand.

PC wire strands are also anchored by means of the combination of forming the end portion of the PC wire strand into a enlarged head and clamping the adjacent portion of the PC wire strand by wedges, as shown in US—A—3,820,832. However, in this kind of anchoring means, the tension or the stressing force of the PC wire strand is taken only by the wedge anchor and the enlarged head of PC wire strand assists in transmitting the said force to the wedges. Such an anchor fitting is therefore large and expensive for embedded use. Another function of the enlarged head of the PC wire strand in this invention is prevention of undesired slip of the strand in the wedges and ejection of the wedges from the anchor sleeve by jerky movements.

The present invention aims to provide an anchorage for PC wire strands which has sufficient strength to match the breaking strength of those strands and which is small in size, suitable for embedded use and superior in economy.

More specifically, on the basis of experimental data referred to hereinafter, it has been found that if an anchor portion comprising a combination of an anchoring member and an enlarged head portion is provided on a PC wire strand and about two-thirds of the breaking force is taken by the anchoring member and the remainder by the enlarged head portion, then the anchoring member can be shortened to from one third to one half while achieving 100% anchoring efficiency.

According to the present invention there is provided an anchorage for a wire strand for prestressed concrete, comprising an enlarged head portion formed by heading a terminal end of a wire strand, and an anchoring member held in pressure contact with a portion of said wire strand in a position near said terminal end and having a side end held in close contact with said enlarged head portion, said anchoring member being so formed as to have a length corresponding to from one third to one half of the length required for anchoring said wire strand by said anchoring member alone.

In the accompanying drawings:

FIG. 1 is a sectional view of an anchorage according to the prior art;

FIG. 2 is a sectional view of an anchorage according to an embodiment of the present invention;

FIG. 3 is a sectional view showing an example of a method for obtaining the anchorage of FIG. 2;

FIG. 4 is a enlarged detail of the heading die shown in FIG. 3;

FIG. 5 is a graph showing the relationship between the sleeve length of a compression grip and a breaking load;

FIG. 6 is a sectional view of an anchorage according to an embodiment of the present invention;

FIG. 7 is an end view of a prestressed concrete pile according ton an embodiment of the present invention;

FIG. 8 is a partially sectional view of a prestressed concrete pile according to an embodiment of the present invention.

FIG. 9 is an end view of an anchor for multistrand cable according to an embodiment of the present invention; and

FIG. 10 is a partially sectional view of the end portion of an anchor cable according to an embodiment of the present invention.

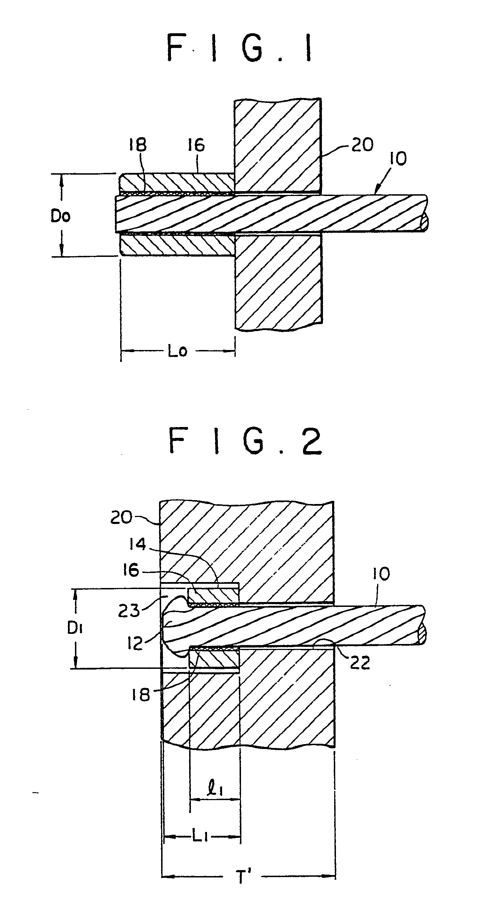

Referring to FIG. 2, there is shown an embodiment of the anchorage of the present invention, in which the reference numeral 10 denotes a PC wire strand, numeral 12 denotes an enlarged head portion formed by heading, and numeral 14 denotes a compression grip (anchor fitting) held in pressure contact with the PC wire strand 10. The compression grip as referred to herein comprises a sleeve for pressure contact with the PC wire strand 10 to form an anchor portion. In FIG. 2 the compression grip 14 includes a sleeve 16 and a wire coil 18 of a triangular cross section serving as a friction enhancing material. The triangular wire coil 18 is interposed between the PC wire strand 10 and the sleeve 16, and in this state the sleeve 16 is brought into pressure contact with the PC wire strand 10 to form an integral body. However, the friction enhancing material is not limited to the above triangular wire coil 18, and any other suitable friction enhancing material may be used, for example carborundum, or alternatively the PC wire strand 10 itself may be endowed with a friction enhancing action by a slight threading or other means. The length of the compression grip 14 is set at one half to one third of the length required for anchoring with the compression grip alone. The enlarged head portion 12 is brought into a close contact with a side end of the compression grip 14 to form a terminal end of the PC wire strand 10. The numeral 20 denotes a bearing plate, numeral 22 denotes an anchoring hole formed in the bearing plate and numeral 23 is an enlarged space formed in the bearing plate.

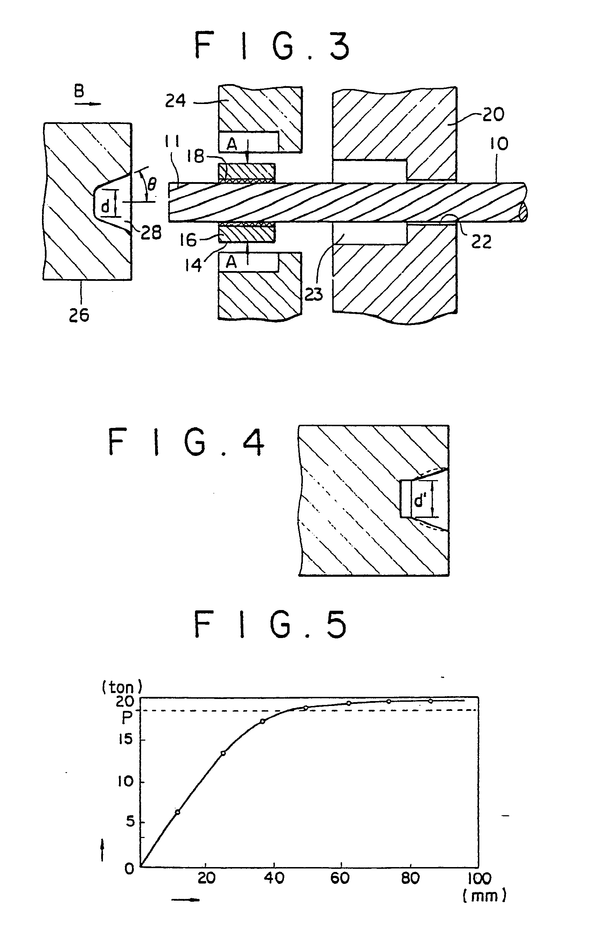

An example of a method for obtaining this anchoring structure will now be described with reference to Fig. 3. This shows a state before pressure bonding of the compression grip 14 and before heading, in which the PC wire strand 10 has already been inserted through the anchoring hole 22 of the bearing plate 20. Over the outer periphery of an end portion 11 of the PC wire strand in a position leaving an extra length (one to two times the diameter of the PC wire strand) sufficient to perform heading, there are disposed a friction enhancing material such as the triangular wire coil 18 and the sleeve 16, and then the sleeve 16 is brought into pressure contact with the PC wire strand 10 as indicated by arrow "A" by compressing, swaging or other suitable means. In this case, the compressing of the sleeve 16 may be done by a chucking die 24 of a heading machine for the formation of an enlarged head portion, whereby it is possible to let the above die fulfil both compressing and chucking functions at the same time. Simultaneously with this pressure bonding operation, heading is carried out on the end portion of the PC wire strand 10 by means of a heading die 26 of the heading machine to form the enlarged head portion 12. In this way, an anchor portion is obtained wherein the enlarged head portion 12 and the compression grip 14 are in close contact and integral with each other. Thereafter, PC wire strand 10 is tensioned to the required load by a jack or other tensioning machines and anchored at the bearing plate 20.

Conventional cold heading can be used as the method of forming the end portion of PC wire strand into an enlarged head. However, it is preferred to form at a temperature between 100°C and 900°C, more preferably between 500°C and 900°C. In this case, the PC wire strand is heated by passing an electric current between the chucking die 24 and the heading die 26. Other methods may also be used. According to our experiments the shape of the enlarged head formed at a temperature between 500°C and 900°C is satisfactory. If ordinary cold heading is practised, satisfactory forming of the enlarged head cannot be achieved due to the fact that wires forming PC wire strand have stiffness and lie with a certain twist angle against the direction of heading, and so each wire is scattered away when it is pressed by the heading die 26. Therefore, it is preferable to heat the end of PC wire strand 10 to a temperature between 500°C and 900°C to ease the resistance to deformation as much as possible, and also to make the shape of the recess 28 of the heading die 26 a truncated cone as shown in FIG. 3 and to make the diameter $d$ of the bottom of the recess 28 one half to three quarters of the diameter of the PC wire strand, thereby binding each wire at the recess 28. As another method of binding each wire, the bottom of the recess 28 of the heading die 26 may be shaped cylindrically with its diameter $d'$ kept about the same as that of the PC wire strand 10, as shown in FIG. 4. Of course it is possible to shape the recess 28 of the heading die 26 as a spherical surface in order to form the enlarged head of the PC wire strand 10. Our experiments showed that formation of the enlarged head is possible by keeping the angle $\theta$ of the inner tapered surface of the recess 28 between 10° and 30°, and by keeping it around 20° the most satisfactory result could be gained both in the shape of the enlarged head and in anchoring efficiency.

According to the above method, moreover, since in the heading operation the inside portion of the head is received not by the chucking die 24 but by the sleeve 16 which is softer than the chucking die 24, affinity is created between the wires of the PC wire strand and the sleeve 16, whereby the deterioration of strength caused by buckling of the PC strand wires at the inside neck portion of the head can be reduced. Such a secondary effect is also achieved.

In this anchoring structure, as previously noted, the length of the compression grip 14 is set at one half to one third of the length required for anchoring with the compression grip 14 alone, and this numerical limitation is based on a fact obtained from the following experimental data.

When an enlarged head portion is formed on PC wire strand 10 by means of heading, the anchoring efficiency of the enlarged head portion (i.e. the ratio of anchoring strength to the breaking strength of the PC wire strand) is from about 40% to about 60%. Therefore, in order to allow both the compression grip 14 and the enlarged head portion 12 to take part of the breaking force, it is preferable, when unstability in the above-mentioned range of the anchoring efficiency of the enlarged head portion 12 is taken into account for about two thirds of the breaking force to be taken by the compression grip 14 and the remainder by the enlarged head portion 12. On the other hand, according to the results of an anchoring efficiency test, the relationship between the sleeve length of the compression grip 14 and the breaking load is as shown in the graph of FIG. 5. This graph shows the results of an anchoring efficiency test for a compression grip 14 using the aforementioned triangular coil 18 as a friction enhancing material, in which a PC wire strand 12.7 mm in diameter was used. The mark P in this graph indicates a specified breaking load (18,700 kg). Reference to this graph clearly shows that if the specified breaking force is taken by the compression grip 14 alone, a sleeve length of 50 to 60 mm is required, whereas if about two thirds of the specified breaking load is taken by the compression grip 14 according to the present invention, the sleeve length becomes about 20 mm, that is, the sleeve length is shortened nearly to one third as compared with the case of the compression grip 14 alone.

Even when the material and reduction area of the sleeve 16 of the compression grip 14 as well as the kind of friction enhancing material are changed, the relationship between the sleeve length and the breaking load exhibits qualitatively the same tendency as in the aforesaid graph, although it changes quantitatively. Therefore, in the structure of the present invention, by setting the length of the compression grip 14 at one hald to one third of the length required for anchoring with the compression grip 14 alone, about two thirds of the breaking force is taken by the compression grip 14.

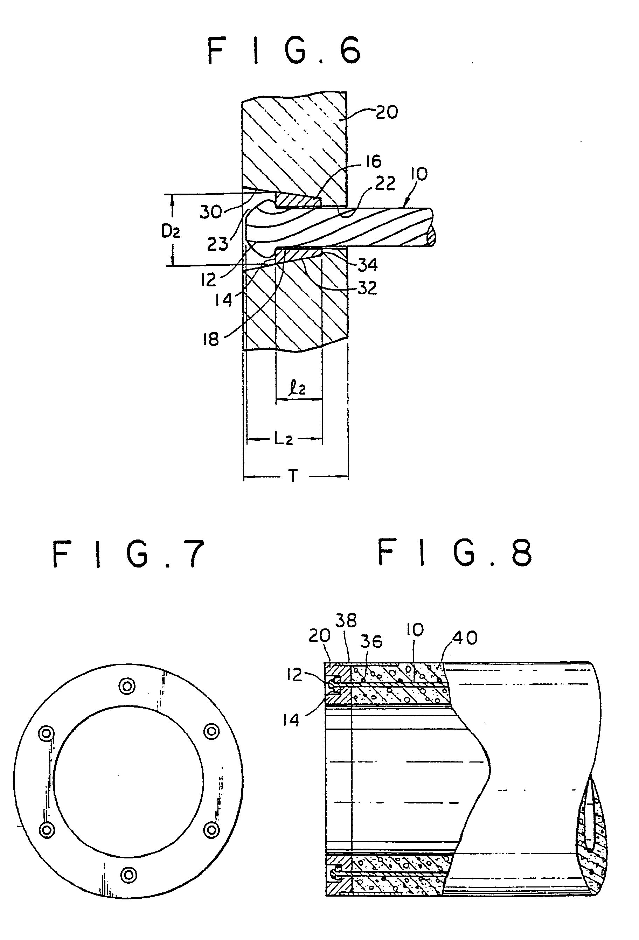

Further in order to reduce the size of the compression grip 14 while maintaining 100% anchoring efficiency, the outer circumferential face of the sleeve 16 and the corresponding inner circumferential face 30 of an enlarged space 23 adjacent to an anchoring hole 22 can be tapered as shown in FIG. 6.

In this anchorage too, the load added to an anchorage by tensioning the PC wire strand is borne by the above-mentioned enlarged head 12 and the compression grip 14. In addition, the compression grip 14 is set adjacent to the anchoring hole 22 in the bearing plate 20 with the tapered surface 30 of the compression grip 14 in contact with the corresponding tapered surface 32 of the enlarged space 23 in the bearing plate 20, thereby applying a tightening force to the PC wire strand 10 by wedge action at the time of tensioning and increasing the anchoring efficiency. Our experiments showed that the suitable angles of the above-mentioned surfaces 30 and 32 were between 5° and 15°. If the angles are smaller than 5°, the compression grip 14 tends to slip out from the anchoring hole 22 of the bearing plate 20 and if the angles are larger than 15° enough tightening force for PC wire strand 10 will not be provided. The longitudinal position of the end 34 of the enlarged space 23 can be determined experimentally so that the desired tensioning force may be provided.

Thus, the length of compression grip 14 required to give enough anchoring efficiency is remarkably shortened compared with that of the prior art as shown in FIG. 1 and, even compared with that of FIG. 2, is shortened by the amount equivalent to the tightening force gained by wedge action. Further, this method has the advantages of the compression grip 14 and the enlarged head 12 being encased in the enlarged space 23 of the bearing plate 20 to be suited for embedding, and the thickness T of the bearing plate being made less than the thickness T' of the structure shown in FIG. 2. In addition, in the case of the structure shown in FIG. 2 one end surface of the sleeve 16 is required to have the receiving area for the load, and so a sleeve of greater thickness is needed. However FIG. 6 as the tapered outer circumferential surface 32 of the sleeve 16 bears the load, the sleeve is required to have only sufficient thickness to make the outer circumference surface 32 tapered and a sleeve of lesser thickness is preferable in order to transmit the tightening force gained by wedge action to the PC wire strand 10. Therefore, as the whole anchoring portions are reduced in size including the above mentioned enlarged space 23 in the bearing plate 20, the existence of weak portions in the bearing plate 20 is also avoided.

Table 1 below shows the sizes of anchorages needed to give the required anchoring strength, in relation to the embodiments of FIGS. 2 and 6 and the prior art as shown in FIG. 1, that is, the total lengths of anchorages $L_0$, $L_1$, $L_2$, the diameters of the sleeves $D_0$, $D_1$, $D_2$, and the lengths of the sleeves in the present invention $1_1$, $1_2$ and in the prior art $L_0$ for PC wire strands of 9.3 mm and 12.7 mm in diameter. Total lengths of anchorages mean, in relation to the prior art, the length of the sleeve only, and in relation to the present invention, mean the lengths of the enlarged heads 12 plus those of the sleeves $L_1$ or $L_2$.

TABLE 1

| Diameter of PC wire Strand | Total length of anchorages | | | Diameter of sleeves | | | Length of sleeves | | |
|---|---|---|---|---|---|---|---|---|---|
| | Prior art | FIG. 2 | FIG. 6 | Prior art | FIG. 2 | FIG. 6 | Prior art | FIG. 2 | FIG. 6 |
| | $L_0$ | $L_1$ | $L_2$ | $D_0$ | $D_1$ | $D_2$ | $L_0$ | $L_1$ | $L_2$ |
| 9.3 mm | 30 mm | 22 mm | 17 mm | 18.5 mm | 20 mm | 17.5 mm | 30 mm | 15 mm | 10 mm |
| 12.7 mm | 55 | 30 | 25 | 25.5 | 27 | 24 | 55 | 20 | 15 |

As will be seen from the test results, while in the prior art as shown in FIG. 1 the length $L_0$ of the sleeve 16 needs to be three to four times the diameter of PC wire strand, in the present inventions the lengths of the sleeves $1_1$ and $1_2$ are shortened to from one (1) to one and a half (1.5) times the diameters of the PC wire strands and the total lengths of the anchorages $L_1$ and $L_2$ including the enlarged heads are also reduced to about twice the diameters of the PC wire strands. By using 9.3 mm diameter PC wire strands manufactured in accordance with JIS G 3536—1971 with the specified breaking strength of min. 9.050 kg, efficiencies were tested in three cases, that is, the anchorage with the enlarged head only and those of FIGS. 2 and 6 with the sizes of anchorages as shown in Table 1. Anchoring efficiencies are shown by the ratios of the breaking strengths of PC wire strands in each case to the specified breaking strength as mentioned above. The test results show that anchoring efficiencies are about 60% in the case of the enlarged head only, and about 100% and 105% respectively in the cases of FIGS. 2 and 6.

FIGS. 7 and 8 show an embodiment where a plurality of anchorages according to this invention as shown in FIG. 2 are applied to a prestressed concrete pile. Numeral 36 denotes spirally shaped reinforcing wire, numeral 38 a reinforcing band and numeral 40 a body of a prestressed concrete pile. A bearing plate 20 compresses a plurality of anchoring holes with enlarged spaces adjacent to them forming a perforated bearing plate, and each enlarged space adjacent to the anchoring hole is adapted to receive the corresponding end of PC wire strands with enlarged heads and anchoring members.

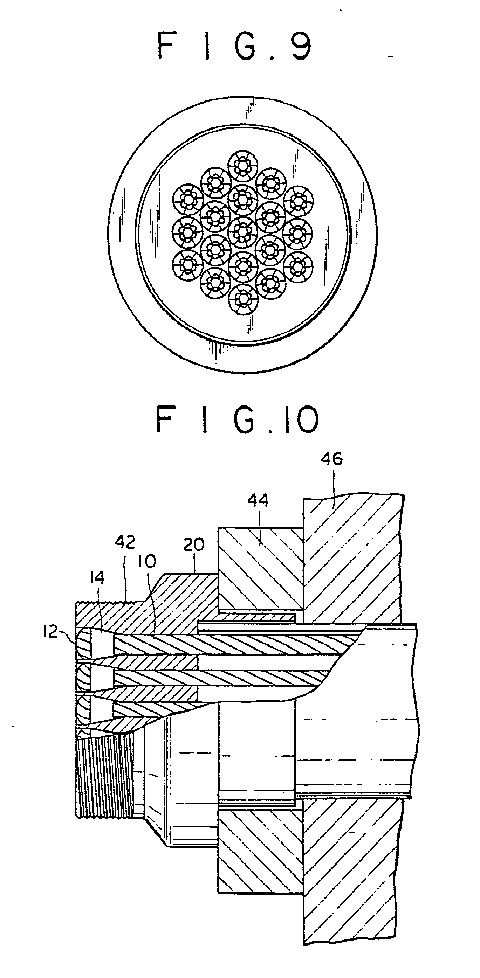

FIGS. 9 and 10 show another embodiment where a plurality of anchorages according to this invention as shown in FIG. 6 are applied to a multi-strand cable. Numeral 42 denotes a threaded portion for coupling, numeral 44 a bearing plate and numeral 46 a receiving concrete structure. A bearing plate 20 comprises a plurality of anchoring holes with the enlarged space adjacent to them forming a perforated bearing plate, and the inner circumferential surface of the said enlarged space is tapered so as to receive the corresponding tapered sleeve.

Thus, in the anchorage of the present invention, the breaking force is taken both by the compression grip (anchoring member) and by the enlarged head portion, and the length of the compression grip is shortened to about one third to one half as compared with the case where anchoring is effected with the compression grip alone, so that a less expensive and smaller-sized anchoring portion is obtainable while achieving 100% anchoring efficiency. Using this anchoring structure, moreover, it becomes possible to use PC wire strands in place of conventional PC wire or PC steel bar for post-tensioning prestressed concrete structures of an industrially produced prestressed concrete member wherein the anchor portion is used in an embedded state. As a result, various effects are obtained. First, saving of PC steel material is achieved, that is, the quantity of PC steel material is, in principle, proportional to its strength, so if, for example, a deformed PC steel bar (tensile strength: 145 kg/mm$^2$) is substituted by PC wire strand (tensile strength: 190 kg/mm$^2$), about 30% material can be saved because of an increase in strength of (190/145 $\simeq$ 1.3). Moreover, by using a high strength PC wire strand, the number of PC wires used can be decreased, so that the time and labour required for cutting, wiring and like operations can be greatly reduced, and working efficiency thereby improved. Furthermore, it becomes possible to introduce a high load of prestressing which is not achieved with a PC wire or PC steel bar.

**Claims**

1. An anchorage for a wire strand (10) for prestressed concrete, comprising an enlarged head portion (12) formed by heading a terminal end of a wire strand, and an anchoring member (14) held in pressure contact with a portion of said wire strand (10) in a position near said terminal end and having a side end held in close contact with said enlarged head portion (12), characterized by said anchoring member (14) being so formed as to have a length corresponding to from one third to one half of the length required for anchoring said wire strand (10) by said anchoring member (14) alone without said wire strand (10) comprsing an enlarged head portion (12).

2. An anchorage as claimed in claim 1, wherein said heading is performed by a cold heading process.

3. An anchorage as claimed in claim 1, wherein said heading is performed at a temperature in the range of from 200° to 900°C.

4. An anchorage as claimed in any preceding claim, wherein said anchoring member (14) comprises a compression grip.

5. An anchorage as claimed in claim 4, wherein said compression grip (14) comprises a sleeve (16) and a friction enhancing member.

6. An anchorage as claimed in claim 5, wherein said friction enhancing member comprises a wire coil (18).

7. An anchorage as claimed in any preceding claim, comprising a bearing plate (20) having a plurality of anchoring holes with enlarged spaces adjacent to them, thereby forming a perforated bearing plate, each enlarged space of said anchoring holes being adapted to receive a corresponding wire strand with an enlarged head portion and an anchoring member.

8. An anchorage as claimed in any one of claims 1 to 6, wherein said anchoring member is so formed as to have a tapered outer circumferential surface with an angle of from 5° to 15°, and is received by a corresponding enlarged space with a tapered inner surface adjacent to an anchoring hole of a bearing plate.

9. An anchorage as claimed in claim 8, wherein a bearing plate comprises a plurality of said anchoring holes with enlarged spaces having tapered inner surfaces, thereby forming a perforated bearing plate, each said enlarged space being adapted to receive a corresponding wire strand with an enlarged head portion and an anchoring member.

**Patentansprüche**

1. Verankerung für ein Drahtseil (10) für Spannbeton mit einem vergrößerten Kopfabschnitt (12), der durch Kopfbildung an einem Ende eines Drahtseils gebildet ist, sowie einem Verankerungselement (14), das in Druckkontakt mit einem Abschnitt des Drahtseils (10) in einer Position im Bereich des Endes gehalten wird und mit einem Seitenende in dichtem Kontakt mit dem vergrößerten Kopfabschnitt (12) gehalten wird, dadurch gekennzeichnet, daß das Verankerungselement (14) derart ausgebildet ist, daß es eine Länge aufweist, die einem Drittel bis einer Hälfte derjenigen Länge entspricht, die zum Verankern des Drahtseils (10) mit Hilfe des Verankerungselementes (14) allein ohne das mit einem vergrößerten Kopfabschnitt (12) versehene Drahtseil (10) erforderlich wäre.

2. Verankerung nach Anspruch 1, worin die Kopfbildung durch ein Kalt-Kopfbildungsverfahren durchgeführt wird.

3. Verankerung nach Anspruch 1, worin die Kopfbildung bei einer Temperatur in dem Bereich von 200° bis 900°C durchgeführt wird.

4. Verankerung nach einem vorhergehenden Anspruch, worin das Verankerungselement (14) eine Pressungs-Einspannung aufweist.

5. Verankerung nach Anspruch 4, worin die Pressungs-Einspannung (14) eine Hülse (16) und ein Reibungsvergrößerungselement aufweist.

6. Verankerung nach Anspruch 5, worin das Reibungsvergrößerungselement eine Drahtwicklung (18) enthält.

7. Verankerung nach einem vorhergehenden Anspruch, enthaltend eine Lagerplatte (20) mit einer Vielzahl von Verankerungslöchern mit vergrößerten, benachbart zu ihnen angeordneten Räumen zur Bildung einer durchlöcherten Lagerplatte, wobei jeder vergrößerte Raum der Verankerungslöcher zur Aufnahme eines jeweiligen Drahtseils mit einem vergrößerten Kopfabschnitt und einem Verankerungselement ausgebildet ist.

8. Verankerung nach einem der Ansprüche 1 bis 6, worin das Verankerungselement derart ausgebildet ist, daß es eine spitz zulaufende äußere Umfangsoberfläche mit einem Winkel von 5° bis 15° aufweist und von einem entsprechenden vergrößerten Raum mit einer spitz zulaufenden inneren Oberfläche benachbart zu einem Verankerungsloch einer Lagerplatte aufgenommen wird.

9. Verankerung nach Anspruch 8, worin eine Lagerplatte eine Vielzahl der Verankerungslöcher mit vergrößerten, spitz zulaufende innere Oberflächen aufweisenden Räumen zur Bildung einer durchlöcherten Lagerplatte aufweist und jeder vergrößerte Raum zur Aufnahme eines entsprechenden Drahtseils mit einem vergrößerten Kopfabschnitt und einem Verankerungselement ausgebildet ist.

**Revendications**

1. Un ancrage pour un câble métallique (10) pour béton précontraint, comprenant une partie de tête élargie (12) réalisée par une étape de formation de tête sur une extrémité terminale d'un câble métallique, et un élément d'ancrage (14) maintenu en contact sous pression avec une partie du câble métallique (10) dans une position proche de l'extrémité terminale et possédant une extrémité latérale maintenue en contact étroit avec ladite partie de tête élargie (12), caractérisé par le fait que l'élément d'ancrage (14) est réalisé de telle sorte qu'il possède une longueur comprise entre le tiers et la moitié de la longueur requise pour ancrer ledit câble métallique (10) à l'aide dudit élément d'ancrage (14) seul, dans le cas où ledit câble métallique (10) ne comprendrait pas une partie de tête élargie (12).

2. Un ancrage selon la revendication 1, dans lequel l'étape de formation d'une tête est réalisée selon un processus de formation de tête à froid.

3. Un ancrage selon la revendication 1, dans lequel l'étape de formation de tête est réalisée à une température comprise dans la gamme de 200° à 900°C.

4. Un ancrage selon l'une quelconque des revendications prédédentes dans lequel ledit élément d'ancrage (14) comprend une douille de compression.

5. Un ancrage selon la revendication 4, dans lequel ladite douille de compression (14) comprend un manchon (16) et un élément qui augmente la friction.

6. Un ancrage selon la revendication 5, dans lequel ledit élément qui augmente la friction comprend un enroulement de fil métallique (18).

7. Un ancrage selon l'une quelconque des revendications précédentes comprenant une plaque support (20) possédant une pluralité d'orifices d'ancrage et des chambres élargies qui leur sont adjacentes, de façon à former une plaque d'appui perforée, chaque chambre élargie des orifices d'ancrage étant adaptée pour recevoir un câble métallique correspondant muni d'une partie de tête élargie et d'un élément d'ancrage.

8. Un ancrage selon l'une quelconque des revendications 1 à 6, dans lequel ledit élément d'ancrage est réalisé de façon à posséder une surface circonférentielle extérieure évasée avec une angle compris entre 5 et 15°, et est engagé dans une chambre élargie correspondante possédant une surface interne effilée adjacente à un orifice d'ancrage d'une plaque d'appui.

9. Un ancrage selon la revendication 8, dans lequel une plaque d'appui comprend une pluralité desdits orifices d'ancrage munis de chambres e'largies possédant des surfaces internes effilées, de façon à former une plaque d'appui perforée, chacune desdites chambres élargies étant adaptée pour recevoir un câble métallique correspondant mini d'une partie de tête élargie et d'un élément d'ancrage.

# F I G . 1

# F I G . 2

# F I G . 3

# F I G . 4

# F I G . 5

# F I G . 6

# F I G . 7

# F I G . 8

# F I G . 9

# F I G . 10